# EUROPÄISCHE PATENTSCHRIFT

(11) **EP 3 759 804 B1**
(45) Veröffentlichungstag und Bekanntmachung des Hinweises auf die Patenterteilung: **07.10.2026**
(21) Anmeldenummer: 19701078.8
(22) Anmeldetag: 17.01.2019
(51) Int. Cl.: H02K 41/03, H02K 15/16

(54) **VERFAHREN UND VORRICHTUNG ZUR JUSTAGE EINES TRANSPORTFAHRZEUGS FÜR EINE BEHÄLTERBEHANDLUNGSANLAGE**
METHOD AND DEVICE FOR ADJUSTING A TRANSPORT VEHICLE FOR A CONTAINER-HANDLING SYSTEM
PROCÉDÉ ET DISPOSITIF D'AJUSTAGE D'UN VÉHICULE DE TRANSPORT POUR UNE INSTALLATION DE MANIEMENT DE CONTENEURS

(30) Priorität: 26.02.2018 DE 102018202868
(43) Veröffentlichungstag der Anmeldung: 06.01.2021
(73) Patentinhaber: Krones AG, 93073 Neutraubling (DE)
(72) Erfinder: ELSPERGER, Stefan, 93073 Neutraubling (DE); DAVIDSON, Hartmut, 93073 Neutraubling (DE)
(74) Vertreter: Grünecker Patent- und Rechtsanwälte PartG mbB
(86) Internationale Anmeldenummer: PCT/EP2019/051122
(87) Internationale Veröffentlichungsnummer: WO 2019/162001

(56) Entgegenhaltungen:
- EP-A1- 3 109 998
- WO-A1-2007/036415
- CN-A- 1 948 987
- CN-B- 103 926 031
- DE-A1- 102009 018 871
- DE-A1- 102015 226 139
- JP-A- 2004 254 453
- JP-A- 2010 110 121
- JP-A- S50 109 412
- JP-A- S60 113 651
- JP-U- S49 125 211
- US-A1- 2010 164 306

## Beschreibung

Die Erfindung betrifft ein Verfahren und eine Vorrichtung zur Justage eines Transportfahrzeugs für eine Behälterbehandlungsanlage mit den Merkmalen des Oberbegriffs von Anspruch 1 bzw. 8.

Es ist bekannt, Linearmotorsysteme in Behälterbehandlungsanlagen dazu einzusetzen, um Transportfahrzeuge (Shuttles) individuell zum Behältertransport anzutreiben bzw. zu bewegen. Beispielsweise sind die Transportfahrzeuge jeweils mit einer Behälteraufnahme ausgebildet, um einen Behälter, insbesondere im Mündungsbereich zum Transport aufzunehmen. Die Linearmotorsysteme sind mit Langstatoren und Führungsschienen ausgebildet, um die Transportfahrzeuge individuell entlang einer oder mehrerer Transportbahnen anzutreiben, insbesondere zu beschleunigen oder abzubremsen.

Für den Antrieb umfasst das Transportfahrzeug zwei sich gegenüberliegende Sekundärteile, die als Anker mittels des Linearmotorsystems elektromagnetisch angetrieben werden. Dementsprechend ist üblicherweise das Linearmotorsystem entlang einer bestimmten Transportbahn mit zwei Langstatoren ausgebildet, zwischen denen im Betrieb die zwei gegenüberliegenden Sekundärteile des Transportfahrzeugs laufen und davon angetrieben.

Darüber hinaus sind für derartige Linearmotorsysteme aus der DE 10 2013 218 389 A1 oder der EP 3 109 998 A1 Weichen bekannt, mit denen die Transportfahrzeuge auf verschiedene Transportbahnen durch elektromagnetische Wechselwirkung verzweigt werden können. Dadurch können die Transportfahrzeuge von einer Hauptbahn auf zwei divergierende Nebenbahnen verzweigt werden. Dazu wird in einem Verzweigungsbereich der Weiche die Normalkraft zwischen einem der beiden Langstatoren und dem korrespondierenden Sekundärteil des Transportfahrzeugs mittels Feldschwächung reduziert, während die Normalkraft auf der gegenüberliegenden Seite zwischen Langstator und korrespondierendem Sekundärteil mittels Feldstärkung erhöht wird, so dass das Transportfahrzeug zu dieser Seite hingezogen und dadurch zur entsprechenden Nebenbahn hin verzweigt wird.

Die JP 2004 254453 A offenbart eine Vorrichtung zur Messung der Querkraft eines Linearmotors.

Die WO 2007/036415 A1 offenbart ein Sekundärteil einer linearen elektrischen Maschine und ein Verfahren zu dessen Herstellung.

Üblicherweise werden die gewünschten Magnetkräfte im Bereich der Weiche dadurch justiert, dass die Luftspalten zwischen den beiden gegenüberliegenden Sekundärteilen und den jeweiligen Langstatoren genau eingestellt werden. Dadurch dass das Sekundärteil, sowie der Stator-Eisenkern üblicherweise mit Blechen verschutzt und teilweise vergossen sind, ist eine direkte Messung

Messung des Luftspalts nur schwer möglich bzw. mit Ungenauigkeiten verbunden. Auch weitere Einflussparameter, wie z.B. die Feldstärketoleranzen verschiedener Sekundärteilchargen bleiben dabei unberücksichtigt. Somit ist dieses Verfahren relativ ungenau. Gleichzeitig ist insbesondere für eine korrekte Funktion der Magnetweiche eine sehr genaue Einstellung der beiderseitigen Magnetnormalkraft erforderlich.

Aufgabe der vorliegenden Erfindung ist es daher, ein Verfahren und eine Vorrichtung zur Justage eines Transportfahrzeugs für eine Behälterbehandlungsanlage bereitzustellen, die eine einfachere Justage der Magnetkräfte ermöglichen.

Zur Lösung dieser Aufgabenstellung stellt die Erfindung ein Verfahren zur Justage eines Transportfahrzeugs für eine Behälterbehandlungsanlage mit den Merkmalen des Anspruchs 1 bereit. Vorteilhafte Ausführungsformen sind in den Unteransprüchen genannt.

Dadurch, dass vor der Justage die erste Magnetkraft des ersten Sekundärteils und die zweite Magnetkraft des zweiten Sekundärteils mit dem Sensor bestimmt werden und miteinander und/oder mit wenigstens einer Referenzkraft verglichen werden, können Abweichungen von der wenigstens einen Referenzkraft und/oder ein Unterschied der beiden Magnetkräfte ermittelt werden. Dadurch, dass darauf basierend die beiden Sekundärteile an dem Transportfahrzeug justiert werden, können die Abweichungen bzw. der Unterschied der beiden Magnetkräfte kompensiert werden. Folglich wirken dann die beiden gegenüberliegenden Sekundärteile im Betrieb der Behälterbehandlungsanlage mit gleicher Magnetkraft auf die Langstatoren des Linearmotorsystems ein. Folglich ist mittels des Verfahrens eine einfache Justage der Magnetkräfte des Transportfahrzeugs für den Betrieb mit dem Linearmotorsystem möglich.

Denkbar ist, dass das Verfahren zur Justage in der Behälterbehandlungsanlage oder in einem Herstellungsbetrieb für die Behälterbehandlungsanlage, insbesondere des Linearmotorsystems durchgeführt wird. Mit dem Transportfahrzeug und dem Linearmotorsystem können Behälter in der Behälterbehandlungsanlage transportiert werden. Vorzugsweise können mehrere Behälter mit entsprechend mehreren derartigen Transportfahrzeugen durch die Behälterbehandlungsanlage transportiert werden.

Die Behälterbehandlungsanlage kann wenigstens eine Behälterbehandlungsmaschine, insbesondere eine Getränkeverarbeitungsmaschine umfassen. Die Behälterbehandlungsanlage kann als Transporteur das Linearmotorsystem mit mehreren derartiger Transportfahrzeuge umfassen. Denkbar ist, dass mit dem Verfahren alle oder ein Teil der Transportfahrzeuge der Behälterbehandlungsanlage justiert werden.

Das Transportfahrzeug kann mit einer oder mehreren Schienen des Linearmotorsystems geführt werden. Im Bereich einer Weiche kann das Transportfahrzeug von einer Transportbahn auf mehrere nachfolgende Transportbahnen verzweigt werden. Umgekehrt kann das Transportfahrzeug auch mit der Weiche von mehreren Transportbahnen auf eine nachfolgende Transportbahn geleitet werden. Die zwei gegenüberliegenden Sekundärteile können mit zwei Langstatoren des Linearmotorsystems angetrieben werden. Die Langstatoren des Linearmotorsystems können beidseitig entlang der Transportbahn angeordnet sein und einen Antriebsschlitz bilden, in dem die beiden sich gegenüberliegenden Sekundärteile im Betrieb der Behälterbehandlungsanlage als Anker angeordnet sind.

Das Transportfahrzeug kann ein Trägerelement umfassen, an dem die beiden Sekundärteile gegenüberliegend angeordnet sind. Mit "gegenüberliegend" kann hier gemeint sein, dass die beiden Sekundärteile so angeordnet sind, dass ihre Magnetkräfte in entgegengesetzter Richtung auf das Linearmotorsystem, insbesondere auf die beiden Langstatoren wirken. Das Transportfahrzeug kann im Betrieb mittels Rollen entlang der Transportbahn des Linearmotorsystems geführt werden. Vorzugsweise können die Rollen gegen Schienenelemente des Linearmotorsystems wirken. Das Transportfahrzeug kann eine Behälteraufnahme umfassen, um einen Behälter damit beim Transport aufzunehmen.

Bei dem Verfahren zur Justage kann das Transportfahrzeug an der Vorrichtung zur Justage angelegt werden, wobei die Vorrichtung insbesondere gemäß der weiter unten beschriebenen Merkmale und/oder nach einem der Ansprüche 8 - 13 ausgebildet ist.

Das Transportfahrzeug kann nach der Bestimmung der ersten Magnetkraft gewendet und dann die zweite Magnetkraft bestimmt werden. Dadurch ist gewährleistet, dass die magnetische Anziehungskraft zwischen dem Sensor und dem ersten bzw. zweiten Sekundärteil bei der Bestimmung der beiden Magnetkräfte gleich groß ist.

Das Transportfahrzeug kann bei der Bestimmung der ersten und zweiten Magnetkräfte ortsfest an einem Messtisch der Vorrichtung zur Justage angelegt werden. Dadurch kann es besonders einfach mit einem definierten Abstand des Körpers des Transportfahrzeugs zwischen dem Sensor und dem ersten oder zweiten Sekundärteil positioniert werden. Mit "anlegen" kann hier gemeint sein, dass das Transportfahrzeug mit dem Messtisch in Kontakt gebracht und/oder lösbar verbunden wird. Insbesondere kann das Transportfahrzeug dabei mit wenigstens einer Auflagefläche des Messtisches in Kontakt gebracht und/oder lösbar verbunden werden.

Das Transportfahrzeug kann bei der Bestimmung der ersten Magnetkraft derart am Messtisch angelegt werden, dass das erste Sekundärteil dem Sensor gegenübersteht und anschließend kann das Transportfahrzeug derart gewendet und am Messtisch angelegt werden, dass das zweite Sekundärteil dem Sensor gegenübersteht. Dadurch kann die Vorrichtung zur Justage besonders einfach aufgebaut werden und ein einziger Sensor für die Messung der beiden Magnetkräfte eingesetzt werden. Anders ausgedrückt, kann das Transportfahrzeug bei der Bestimmung der ersten Magnetkraft derart am Messtisch angelegt werden, dass das erste Sekundärteil zu einer Auflagefläche des Messtisches für das Transportfahrzeug hin gerichtet ist, und dann das Transportfahrzeug derart gewendet und am Messtisch angelegt werden, dass das zweite Sekundärteil zu der Auflagefläche des Messtisches für das Transportfahrzeug hin gerichtet ist. Die Auflagefläche kann bei der Bestimmung der ersten und zweiten Magnetkraft mit Rollen und/oder Kontaktelementen des Transportfahrzeugs zusammenwirken.

Bei der Bestimmung der ersten und zweiten Magnetkräfte kann jeweils ein Magnetfeld des ersten bzw. zweiten Sekundärteils über einen Abstand hinweg auf den Sensor wirken. Dadurch ist gewährleistet, dass das erste bzw. zweite Sekundärteil bei der Bestimmung der Magnetkräfte nicht direkt am Sensor anliegt, sondern dass die Magnetfelder in einem Luftbereich gemessen werden.

Bei der Justage des Transportfahrzeugs kann eine Position des ersten und/oder zweiten Sekundärteils am Transportfahrzeug durch Entfernen oder Hinzufügen von wenigstens einem Distanzelement verändert wird. Die Position der Sekundärteile könnte auch stufenlos mittels Abdrückschrauben o.ä. erfolgen. Dadurch wird der Luftspalt zum Sensor der Vorrichtung zur Justage vergrößert oder verringert, so dass auf den Sensor eine entsprechend geringere oder größere Magnetkraft wirkt. Dadurch kann eine Abweichung von der wenigstens einen Referenzkraft und/oder Unterschiede zwischen der ersten Magnetkraft und der zweiten Magnetkraft ausgeglichen werden. Entsprechend wirken dann auch im Betrieb des Transportfahrzeugs die mittels des wenigstens einen Distanzelements justierten Magnetkräfte der beiden gegenüberliegenden Sekundärteile. Das wenigstens eine Distanzelement kann als Plattenelement, insbesondere aus Blech ausgebildet sein. Vorzugsweise kann wenigstens eines der Distanzelemente zwischen dem Trägerelement und wenigstens einem der beiden gegenüberliegenden Sekundärteile entfernt oder hinzugefügt werden, um die Position des ersten und/oder zweiten Sekundärteils zu verändern. Denkbar ist auch, dass die Position des ersten und/oder zweiten Sekundärteils am Transportfahrzeug durch Abdrückschrauben stufenlos verändert wird. Alternativ könnte die Vorrichtung auch dazu verwendet werden, Transportfahrzeuge von Einfachstatoranwendungen zu vermessen und einzustellen. In diesem Fall würde die Normalkraft des pro Transportfahrzeugs einen Sekundärteils gemessen und auf einen Zielwert hin eingestellt werden
Desweiteren stellt die Erfindung zur Lösung der Aufgabenstellung eine Vorrichtung zur Justage eines Transportfahrzeugs für eine Behälterbehandlungsanlage nach einem der Ansprüche 8 -13 bereit. Vorteilhafte Ausführungsformen der Erfindung sind in den Unteransprüchen genannt.

Dadurch, dass die Vorrichtung den Sensor und den Messtisch zum ortsfesten Anlegen des Transportfahrzeugs gegenüber dem Sensor umfasst, und der Sensor zur Bestimmung der Magnetkräfte ausgebildet ist, können vor der Justage die erste Magnetkraft des ersten Sekundärteils und die zweite Magnetkraft des zweiten Sekundärteils mit dem Sensor bestimmt werden und miteinander und/oder mit wenigstens einer Referenzkraft verglichen werden. Folglich können Abweichungen von der wenigstens einen Referenzkraft und/oder ein Unterschied der beiden Magnetkräfte bestimmt werden. Demnach können die beiden Sekundärteile an dem Transportfahrzeug so justiert werden, dass die Abweichungen bzw. der Unterschied der beiden Magnetkräfte kompensiert werden. Entsprechend wirken dann die beiden gegenüberliegenden Sekundärteile im Betrieb der Behälterbehandlungsanlage mit gleicher Magnetkraft auf die Langstatoren des Linearmotorsystems. Folglich ist mit der Vorrichtung eine besonders einfache Justage der Magnetkräfte des Transportfahrzeugs für den nachfolgenden Betrieb mit dem Linearmotorsystem möglich.

Vorzugsweise kann die Vorrichtung zur Justage zur Durchführung des zuvor beschriebenen Verfahrens zur Justage des Transportfahrzeugs ausgebildet sein, insbesondere nach einem der Ansprüche 1 - 7.

Die Vorrichtung zur Justage kann separat von der Behälterbehandlungsanlage angeordnet sein. Beispielsweise kann die Vorrichtung zur Justage in einem Herstellungsbetrieb für die Behälterbehandlungsanlage angeordnet sein. Ebenso ist denkbar, dass die Vorrichtung zur Justage in einem Getränkeherstellungsbetrieb separat von der Behälterbehandlungsanlage angeordnet ist.

Die Vorrichtung zur Justage kann ein oder mehrere Trägerelemente umfassen, an denen der Messtisch und der Sensor angeordnet sind. Die Trägerelemente können Platten, Streben und Füße umfassen, um den Messtisch und den Sensor zu haltern. Vorzugsweise kann der Messtisch direkt an einem der Trägerelemente angeordnet sein.

Der Messtisch kann mindestens eine Auflagefläche zum ortsfesten Auflegen des Transportfahrzeugs umfassen, die bei der Bestimmung der Magnetkräfte mit Rollen und/oder Kontaktelementen des Transportfahrzeugs zusammenwirken. Dadurch kann das Transportfahrzeug während der Bestimmung der Magnetkräfte in einer eindeutigen Position in der Vorrichtung gelagert werden. Beispielsweise können die Auflageflächen durch Oberflächen eines vorzugsweise rechteckigen Rahmenelements gebildet werden.

Der Sensor kann ein magnetisches Element zum Zusammenwirken mit den Sekundärteilen und einen Kraftsensor umfassen. Dadurch kann der Sensor besonders einfach aufgebaut werden. Denkbar ist, dass das magnetische Element aus einem ferromagnetischen Material oder seltenen Erden besteht. Der Kraftsensor kann als S-förmiges Element ausgebildet sein, das Dehnungsmessstreifen umfasst. Dadurch ist der Kraftsensor besonders einfach aufgebaut. Denkbar ist auch, dass der Kraftsensor ein piezoelektrisches Element umfasst. Insbesondere kann das magnetische Element mit einer Krafteinleitungsseite des Kraftsensors fest verbunden sein. Entsprechend kann eine Halterungsseite des Kraftsensors fest an einem der Trägerelemente angeordnet und/oder mit der wenigstens einen Auflagefläche fest verbunden sein. Bei dieser Anordnung kann die direkt auf das magnetische Element einwirkende Magnetkraft bestimmt werden.

Alternativ kann der Kraftsensor separat vom magnetischen Element angeordnet sein und eine Krafteinleitungsstelle des Kraftsensors kann mit der wenigstens einen Auflagefläche fest verbunden sein. Bei dieser Anordnung kann die Magnetkraft durch die zwischen den Rollen/Kontaktelementen des Transportfahrzeugs auf die Auflagefläche wirkende Kraft indirekt bestimmt werden. Dabei können das magnetische Element und die Halterungsseite des Kraftsensors fest an einem der Trägerelemente angeordnet sein.

Denkbar ist auch, dass der Sensor ein Hall-Element zur Bestimmung der Magnetkräfte mittels des Hall-Effekts umfasst. Dadurch kann direkt die magnetische Feldstärke der beiden Sekundärteile gemessen werden.

Weitere Merkmale und Vorteile Erfindung werden nachfolgend anhand der in den Figuren dargestellten Ausführungsbeispiele näher erläutert. Dabei zeigt:
- Fig. 1A - 1B: ein erstes Ausführungsbeispiel einer erfindungsgemäßen Vorrichtung zur Justage eines Transportfahrzeugs in zwei perspektivischen Ansichten von schräg oben;
- Fig. 2A - 2B: ein zweites Ausführungsbeispiel einer erfindungsgemäßen Vorrichtung zur Justage eines Transportfahrzeugs in einer perspektivischen Ansicht von schräg oben und als Schnittansicht; und
- Fig. 3: ein Ausführungsbeispiel eines erfindungsgemäßen Verfahrens zur Justage eines Transportfahrzeugs als Ablaufdiagramm.

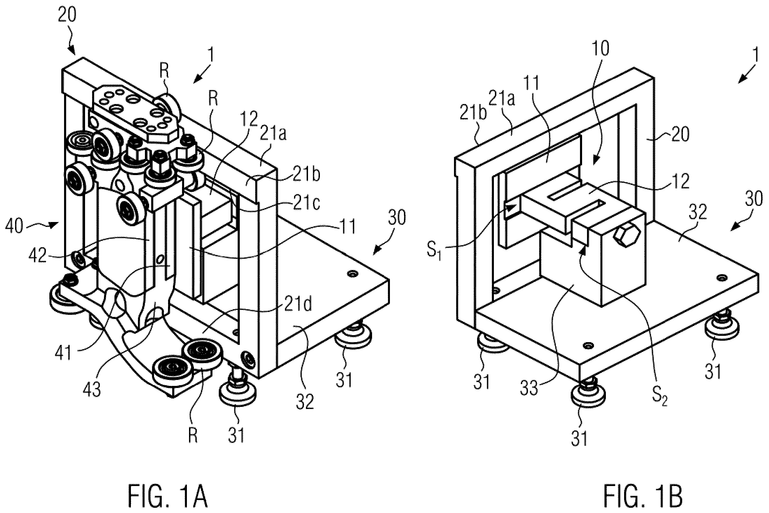

In den Figuren 1A - 1B ist ein erstes Ausführungsbeispiel einer erfindungsgemäßen Vorrichtung 1 zur Justage des Transportfahrzeugs 40 in zwei perspektivischen Ansichten von schräg oben dargestellt.

Zu sehen ist, dass die Vorrichtung 1 ein Traggestell 30 mit mehreren Trägerelementen 31-33 umfasst, an denen der der Sensor 10 und der Messtisch 20 angeordnet sind. Das Traggestell 30 wird dabei durch die Füße 31, die Platte 32 und die Sensoraufnahme 33 gebildet. Die Füße 31 können auf dem Boden oder einem Arbeitstisch aufgestellt werden, so dass sich die Platte 32 im Wesentlichen horizontal und der Messtisch 20 im Wesentlichen vertikal erstrecken. Der Messtisch kann in diesem Beispiel durch zwei Schrauben mit der Platte 32 derart verbunden sein, dass beide einen rechten Winkel einschließen. Folglich kann das Transportfahrzeug 40 bei der Vorrichtung 1 nach dem ersten Ausführungsbeispiel in den Figuren 1A - 1B von der Seite her auf den Messtisch 20 aufgelegt werden.

Darüber hinaus ist das Transportfahrzeug 40 zu sehen, das einen Träger 43, die beiden Sekundärteile 41, 42 und die Rollen R umfasst.

Nach der Justage werden die Rollen R des Transportfahrzeugs 40 im Betrieb der hier nicht dargestellten Behälterbehandlungsanlage mittels Führungselementen, beispielsweise Schienen, entlang einer oder mehreren vorgesehenen Transportbahnen geführt. Darüber hinaus wirken die Sekundärteile 41, 42 als Magnete und werden mittels eines hier ebenfalls nicht dargestellten Linearmotorsystems in der Behälterbehandlungsanlage elektromagnetisch angetrieben.

Zu sehen ist auch, dass der Messtisch 20 die Auflageflächen 21a - 21d für die Rollen R des Transportfahrzeugs 40 umfasst. Dadurch kann das Transportfahrzeug 40 ortsfest am Messtisch 20 angelegt werden. Dabei können die Auflageflächen 21a - 21d wenigstens teilweise zueinander rechtwinklig angeordnet sein, um in den verschiedenen Raumrichtungen eine genaue Positionierung des Transportfahrzeugs 40 zu gewährleisten.

Weiter ist zu sehen, dass der Messtisch 20 rahmenartig mit einer innenliegenden Öffnung ausgebildet ist, durch die der Sensor 10, insbesondere das magnetische Element 11 hindurch ragen.

Der Sensor 10 umfasst das magnetische Element 11 und den Kraftsensor 12, der hier beispielsweise als S-förmiges Element mit Dehnungsmessstreifen ausgebildet ist. Zudem ist das magnetische Element 11 mit der Krafteinleitungsseite S₁ des Kraftsensors 12 fest verbunden. Demgegenüber ist die Halterungsseite S₂ des Kraftsensors 12 mit der Sensoraufnahme 33 fest verbunden. Folglich kann also mittels des Kraftsensors 12 eine auf das magnetische Element 11 einwirkende Magnetkraft als Kraft zwischen dem magnetischen Element 11 und der Sensoraufnahme 33 gemessen werden.

Bei der Bestimmung der Magnetkraft wird das Transportfahrzeug 40 mittels der Rollen R am Messtisch 20 derart angelegt, dass das erste Sekundärteil 41 dem Sensor 10 gegenübersteht. Anschließend wird mittels des Sensors 10 eine Messung der auf das magnetische Element 11 einwirkenden, ersten Magnetkraft durchgeführt. Dann wird das Transportfahrzeug 40 derart gewendet und am Messtisch 20 angelegt, dass das zweite Sekundärteil 42 dem Sensor 10 gegenübersteht. Nachfolgend wird erneut eine Messung der auf das magnetische Element 11 einwirkenden, zweiten Magnetkraft durchgeführt. Anschließend werden die erste Magnetkraft und die zweite Magnetkraft miteinander und/oder mit wenigstens einer Referenzkraft verglichen. Weichen die erste bzw. zweite Magnetkraft von der wenigstens einen Referenzkraft und/oder voneinander zu stark ab, so werden sie derart justiert, dass die erste Magnetkraft und die zweite Magnetkraft gleich groß sind.

Die Magnetkräfte des ersten bzw. zweiten Sekundärteils 41, 42 können dadurch justiert werden, dass zwischen das jeweilige Sekundärteile 41, 42 und den Träger 43 wenigstens ein Distanzelement entfernt oder hinzugefügt wird. Dadurch lässt sich der Abstand zwischen dem ersten bzw. zweiten Sekundärteil 41, 42 und dem Sensor 10 verändern, wodurch die Magnetkräfte entsprechend justierbar sind.

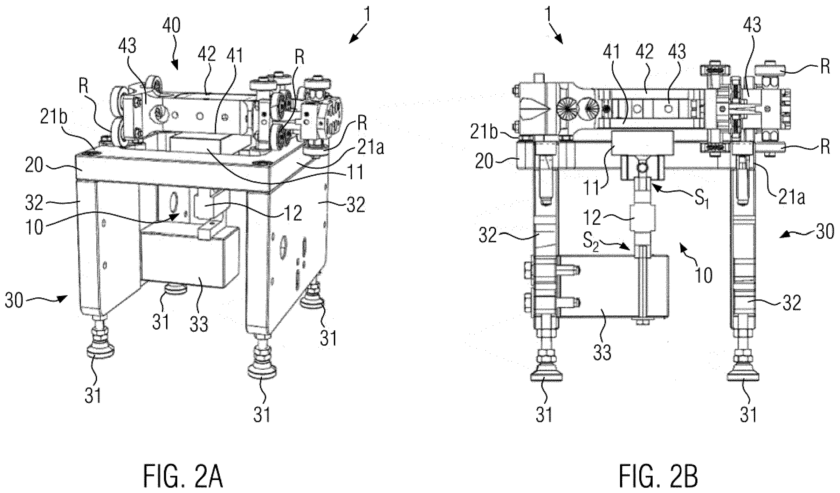

In den Figuren 2A - 2B ist ein zweites Ausführungsbeispiel einer erfindungsgemäßen Vorrichtung 1 zur Justage des Transportfahrzeugs 40 in einer perspektivischen Ansicht von schräg oben und als Schnittansicht dargestellt.

Die Vorrichtung 1 in den Figuren 2A - 2B unterscheidet sich von dem Ausführungsbeispiel in den Figuren 1A - 1B lediglich durch das Traggestell 30 und die horizontale Anordnung des Messtisches 20.

Zu sehen ist, dass das Traggestell 30 zwei sich im Wesentlichen vertikal erstreckende Platten 32 umfasst, wobei an deren unteren Enden die Füße 31 und an deren oberen Enden der Messtisch 20 angeordnet sind. Dadurch erstreckt sich der Messtisch 20 im Wesentlichen horizontal ähnlich einer Tischplatte zwischen den beiden Platten 32. Der Aufbau des Messtisches 20 entspricht ansonsten der zuvor in Bezug auf die Figuren 1A - 1B beschriebenen Struktur.

Darüber hinaus ist zu sehen, dass die Sensoraufnahme 33 mit einer der beiden Platten 32 fest verbunden ist und davon rechtwinklig absteht, beispielsweise wie in der Figur 2B zu sehen mit der linken Platte 32. Denkbar ist jedoch auch, dass die Sensoraufnahme 33 mit der rechten Platte 32 oder auch mit beiden Platten 32 verbunden ist.

Folglich ist die Halterungsseite S₂ des Kraftsensors 12 mit der Sensoraufnahme 33 und die Krafteinleitungsseite S₁ mit dem magnetischen Element 11 fest verbunden. Das magnetische Element 11 ragt seinerseits durch die Öffnung des Messtisches 20 nach oben hindurch, um einen möglichst geringen Abstand zu einem der beiden Sekundärteile 41, 42 hin zu gewährleisten.

Folglich kann das Transportfahrzeug 40 bei der Vorrichtung 1 nach dem zweiten Ausführungsbeispiel in den Figuren 2A - 2B von oben her auf den Messtisch 20 aufgelegt werden.

Ansonsten erfolgt die Bestimmung der ersten und zweiten Magnetkraft des ersten bzw. zweiten Sekundärteils 41, 42 entsprechend der zuvor in Bezug auf das erste Ausführungsbeispiel dargelegten Verfahrensweise.

Folglich können mit den Vorrichtungen 1 nach dem ersten und zweiten Ausführungsbeispiel die Magnetkräfte des ersten und zweiten Sekundärteils ein 40, 42 einfach bestimmt und justiert werden, so dass sie im Wesentlichen gleich groß sind. Dadurch ist im Betrieb der Behälterbehandlungsanlage gewährleistet, dass das Transportfahrzeug 40 beim Durchfahren einer Weiche zur gewünschten Abzweigung hingelenkt wird.

Alternativ zu dem zweiten Ausführungsbeispiel in den Figuren 2A - 2B ist auch denkbar, dass das magnetische Element 11 fest mit der Sensoraufnahme 33 verbunden ist (beispielsweise mittels eines Verbindungselements) und dafür ein oder mehrere Kraftsensoren zwischen dem Messtisch 20 und den Platten 32 angeordnet sind. Dadurch können die Magnetkräfte indirekt über die von den Rollen R auf den Messtisch 20 wirkenden Kräfte bestimmt werden.

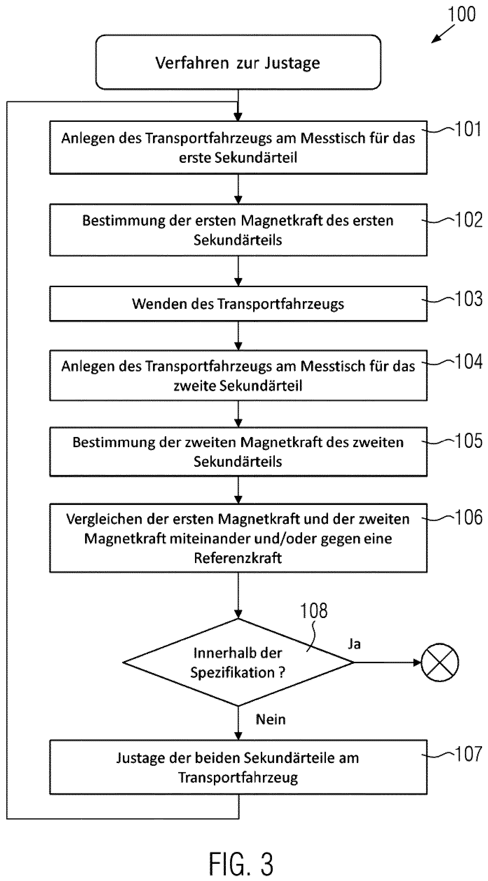

In der Figur 3 ist ein Ausführungsbeispiel eines erfindungsgemäßen Verfahrens 100 zur Justage eines Transportfahrzeugs als Ablaufdiagramm dargestellt. Das Verfahren 100 kann mit der Vorrichtung 1 nach einem der beiden Ausführungsbeispiele in den Figuren 1A - 1B bzw. 2A - 2B durchgeführt werden, um das Transportfahrzeug 40 zu justieren.

Zunächst wird im Schritt 101 das Transportfahrzeug am Messtisch ortsfest angelegt, so dass das erste Sekundärteil dem Sensor gegenübersteht.

Anschließend wird im Schritt 102 die erste Magnetkraft des ersten Sekundärteils bestimmt. Dabei wirkt das Magnetfeld beispielsweise auf ein magnetisches Element ein, das seinerseits eine entsprechende Kraft auf einen Kraftsensor ausübt. Beispielsweise leitet der Kraftsensor die so gemessene Kraft als Signal an eine Anzeige oder ein Computersystem weiter, so dass sie als erste Magnetkraft des ersten Sekundärteils festgehalten werden kann.

Im Schritt 103 wird das Transportfahrzeug gewendet und im Schritt 104 am Messtisch ortsfest angelegt, so dass das zweite Sekundärteil dem Sensor gegenübersteht.

Nachfolgend wird im Schritt 105 die zweite Magnetkraft des zweiten Sekundärteils gleichermaßen wie im Schritt 1 oder 2 bestimmt und als zweite Magnetkraft des zweiten Sekundärteils festgehalten.

Nun werden die erste Magnetkraft und die zweite Magnetkraft im Schritt 106 miteinander und/oder gegen wenigstens eine Referenzkraft verglichen. Dadurch kann ermittelt werden, ob die erste Magnetkraft und zweite Magnetkraft innerhalb einer gewünschten Spezifikation liegen bzw. gleich groß sind.

Falls dies nicht der Fall ist (Entscheidung 108), werden die beiden Sekundärteile am Transportfahrzeug im Schritt 107 justiert, und die Schritte 101-106 erneut durchgeführt, bis die erste Magnetkraft und die zweite Magnetkraft innerhalb der gewünschten Spezifikation liegen. Die Justage der beiden Sekundärteile erfolgt beispielsweise durch eine Veränderung ihrer Position am Transportfahrzeug durch Entfernen oder Hinzufügen von wenigstens einem Distanzelement.

Folglich ist also mit dem Verfahren 100 eine besonders einfache Justage der beiden Magnetkräfte des ersten und zweiten Sekundärteils am Transportfahrzeug möglich, so dass das Transportfahrzeug im Betrieb der Behälterbehandlungsanlage auch durch Weichen hindurch sicher angetrieben werden kann.

Es versteht sich, dass in den zuvor beschriebenen Ausführungsbeispielen genannte Merkmale nicht auf diese Merkmalskombination beschränkt sind, sondern auch einzeln oder in beliebigen anderen Merkmalskombinationen möglich sind.

## Patentansprüche

1. Verfahren (100) zur Justage eines Transportfahrzeugs für eine Behälterbehandlungsanlage, wobei das Transportfahrzeug zwei sich gegenüberliegende Sekundärteile umfasst, die als Anker mittels eines Linearmotorsystems der Behälterbehandlungsanlage elektromagnetisch antreibbar sind,
**dadurch gekennzeichnet, dass**
in einer Vorrichtung zur Justage
eine erste Magnetkraft des ersten Sekundärteils mit einem Sensor bestimmt wird (102),
dass eine zweite Magnetkraft des zweiten Sekundärteils mit dem Sensor bestimmt wird (105), und
dass die erste Magnetkraft und die zweite Magnetkraft miteinander und/oder mit wenigstens einer Referenzkraft verglichen werden (106) und die beiden Sekundärteile darauf basierend an dem Transportfahrzeug derart justiert werden, dass die erste Magnetkraft und die zweite Magnetkraft gleich groß sind (107).

2. Verfahren (100) nach Anspruch 1, wobei das Transportfahrzeug nach der Bestimmung der ersten Magnetkraft gewendet (103) und dann die zweite Magnetkraft bestimmt wird (105).

3. Verfahren (100) nach Anspruch 1 oder 2, wobei das Transportfahrzeug bei der Bestimmung der ersten und zweiten Magnetkräfte (102, 105) ortsfest an einen Messtisch der Vorrichtung zur Justage angelegt wird (101, 104).

4. Verfahren (100) nach Anspruch 3, wobei das Transportfahrzeug bei der Bestimmung der ersten Magnetkraft (102) derart am Messtisch angelegt wird, dass das erste Sekundärteil dem Sensor gegenübersteht, und dann das Transportfahrzeug derart gewendet (103) und am Messtisch angelegt wird (104), dass das zweite Sekundärteil dem Sensor gegenübersteht.

5. Verfahren (100) nach Anspruch 3 oder 4, wobei das Transportfahrzeug bei der Bestimmung der ersten Magnetkraft (102) derart am Messtisch angelegt wird, dass das erste Sekundärteil zu einer Auflagefläche des Messtisches für das Transportfahrzeug hin gerichtet ist, und dann das Transportfahrzeug derart gewendet (103) und am Messtisch angelegt wird (104), dass das zweite Sekundärteil zu der Auflagefläche des Messtisches für das Transportfahrzeug hin gerichtet ist.

6. Verfahren (100) nach einem der vorangegangenen Ansprüche, wobei bei der Bestimmung der ersten und zweiten Magnetkräfte (102, 105) jeweils ein Magnetfeld des ersten bzw. zweiten Sekundärteils über einen Abstand hinweg auf den Sensor wirkt.

7. Verfahren (100) nach einem der vorangegangenen Ansprüche, wobei bei der Justage des Transportfahrzeugs (107) eine Position des ersten und/oder zweiten Sekundärteils am Transportfahrzeug durch Entfernen oder Hinzufügen von wenigstens einem Distanzelement verändert wird.

8. Vorrichtung (1) zur Justage eines Transportfahrzeugs (40) für eine Behälterbehandlungsanlage, wobei das Transportfahrzeug (40) zwei sich gegenüberliegende Sekundärteile (41, 42) umfasst, die als Anker mittels eines Linearmotorsystems der Behälterbehandlungsanlage elektromagnetisch bewegbar sind,
**dadurch gekennzeichnet, dass**
die Vorrichtung (1) einen Sensor (10) und einen Messtisch (20) zum ortsfesten Anlegen des Transportfahrzeugs (40) gegenüber dem Sensor (10) umfasst, und
dass der Sensor (10) zur Bestimmung von Magnetkräften ausgebildet ist, um eine Magnetkraft des ersten und / oder zweiten Sekundärteils (41,42) zu bestimmen.

9. Vorrichtung (1) nach Anspruch 8, wobei der Messtisch (20) wenigstens eine Auflagefläche (21a - 21d) zum ortsfesten Auflegen des Transportfahrzeugs (40) umfasst, die bei der Bestimmung der Magnetkräfte mit Rollen (R) und/oder Kontaktelementen des Transportfahrzeugs (40) zusammenwirkt.

10. Vorrichtung (1) nach Anspruch 8 oder 9, wobei der Sensor (10) ein magnetisches Element (11) zum Zusammenwirken mit den Sekundärteilen (41, 42) und einen Kraftsensor (12) umfasst.

11. Vorrichtung (1) nach Anspruch 10, wobei das magnetische Element (11) mit einer Krafteinleitungsseite des Kraftsensors (12) fest verbunden ist.

12. Vorrichtung (1) nach Anspruch 9 und 10, wobei der Kraftsensor separat vom magnetischen Element angeordnet und eine Krafteinleitungsstelle des Kraftsensors mit der wenigstens einen Auflagefläche (21a - 21d) fest verbunden ist.

13. Vorrichtung (1) nach Anspruch 8 oder 9, wobei der Sensor (10) ein Hall-Element zur Bestimmung der Magnetkräfte mittels des Hall-Effekts umfasst.

## Claims

1. A method (100) for adjusting a transport vehicle for a container processing plant, wherein the transport vehicle comprises two opposing secondary parts which can be electromagnetically driven as armatures by means of a linear motor system of the container processing plant,
**characterized in that**
in an adjusting device,
a first magnetic force of the first secondary part is determined using a sensor (102),
a second magnetic force of the second secondary part is determined using the sensor (105), and
**in that** the first magnetic force and the second magnetic force are compared with each other and/or with at least one reference force (106) and, based on the comparison, the two secondary parts are adjusted on the transport vehicle so that the first magnetic force and the second magnetic force are equal in magnitude (107).

2. The method (100) according to claim 1, wherein the transport vehicle is turned (103) after determining the first magnetic force, and then the second magnetic force is determined (105).

3. The method (100) according to claims 1 or 2, wherein, while determining the first and second magnetic forces (102, 105), the transport vehicle is abutted stationarily against a measuring table of the adjusting device (101, 104).

4. The method (100) according to claim 3, wherein, while determining the first magnetic force (102), the transport vehicle is abutted against the measuring table so that the first secondary part faces the sensor, and then the transport vehicle is turned over (103) and abutted against the measuring table (104) so that the second secondary part faces the sensor.

5. The method (100) according to claims 3 or 4, wherein while determining the first magnetic force (102), the transport vehicle is abutted against the measuring table so that the first secondary part is directed towards a support surface of the measuring table for the transport vehicle, and then the transport vehicle is turned over (103) and abutted against the measuring table (104) so that the second secondary part faces the support surface of the measuring table for the transport vehicle.

6. The method (100) according to any one of the preceding claims, wherein while determining the first and second magnetic forces (102, 105), a magnetic field of the first and second secondary part, respectively, acts on the sensor across a distance.

7. The method (100) according to any one of the preceding claims, wherein while adjusting the transport vehicle (107), a position of the first and/or second secondary parts on the transport vehicle is changed by removing or adding at least one spacer element.

8. An apparatus (1) for adjusting a transport vehicle (40) for a container processing plant, wherein the transport vehicle (40) comprises two opposing secondary parts (41, 42) which can be electromagnetically driven as armatures by means of a linear motor system of the container processing plant,
**characterized in that**
the apparatus (1) comprises a sensor (10) and a measuring table (20) for stationarily abutting the transport vehicle (40) against the sensor (10), and
**in that** the sensor (10) is configured to determine magnetic forces in order to determine a magnetic force of the first and/or second secondary parts (41, 42).

9. The apparatus (1) according to claim 8, wherein the measuring table (20) comprises at least one support surface (21a - 21d) for stationarily placing the transport vehicle (40) thereon, which interacts with rollers (R) and/or contact elements of the transport vehicle (40) while determining the magnetic forces.

10. The apparatus (1) according to claims 8 or 9, wherein the sensor (10) comprises a magnetic element (11) for interacting with the secondary parts (41, 42) and a force sensor (12).

11. The apparatus (1) according to claim 10, wherein the magnetic element (11) is fixedly connected to a force application side of the force sensor (12).

12. The apparatus (1) according to claims 9 and 10, wherein the force sensor is arranged separately from the magnetic element and a force application point of the force sensor is fixedly connected to the at least one support surface (21a - 21d).

13. The apparatus (1) according to claims 8 or 9, wherein the sensor (10) comprises a Hall element for determining the magnetic forces by means of the Hall effect.

## Revendications

1. Procédé (100) d'ajustement d'un véhicule de transport pour une installation de traitement de récipients, dans lequel le véhicule de transport comprend deux parties secondaires se faisant face qui peuvent être entraînées de manière électromagnétique sous forme d'induit au moyen d'un système de moteur linéaire de l'installation de traitement de récipients,
**caractérisé en ce que**
au sein d'un dispositif d'ajustement
une première force magnétique de la première partie secondaire est déterminée par un capteur (102),
une deuxième force magnétique de la deuxième partie secondaire est déterminée par le capteur (105), et
la première force magnétique et la deuxième force magnétique sont comparées l'une à l'autre et/ou à au moins une force de référence (106) et les deux parties secondaires sont ajustées en fonction du véhicule de transport de manière à ce que la première force magnétique et la deuxième force magnétique soient égales (107).

2. Procédé (100) selon la revendication 1, dans lequel le véhicule de transport est retourné (103) après la détermination de la première force magnétique, puis la deuxième force magnétique est déterminée (105).

3. Procédé (100) selon la revendication 1 ou 2, dans lequel le véhicule de transport est placé (101, 104) de manière à rester immobile au niveau d'une table de mesure du dispositif d'ajustement lors de la détermination des premières et secondes forces magnétiques (102, 105).

4. Procédé (100) selon la revendication 3, dans lequel, lors de la détermination de la première force magnétique (102), le véhicule de transport est placé au niveau de la table de mesure de telle manière que la première partie secondaire est opposée au capteur, puis le véhicule de transport est retourné (103) et placé (104) au niveau de la table de mesure de telle manière que la deuxième partie secondaire est opposée au capteur.

5. Procédé (100) selon la revendication 3 ou 4, dans lequel, lors de la détermination de la première force magnétique (102), le véhicule de transport est placé au niveau de la table de mesure de telle manière que la première partie secondaire est dirigée vers une surface d'appui de la table de mesure destinée au véhicule de transport, puis le véhicule de transport est retourné (103) et placé (104) au niveau de la table de mesure de telle manière que la deuxième partie secondaire est dirigée vers la surface d'appui de la table de mesure destinée au véhicule de transport.

6. Procédé (100) selon l'une quelconque des revendications précédentes, dans lequel, lors de la détermination des première et seconde forces magnétiques (102, 105), respectivement un champ magnétique de la première ou seconde partie secondaire agit à distance sur le capteur.

7. Procédé (100) selon l'une quelconque des revendications précédentes, dans lequel, lors de l'ajustement du véhicule de transport (107), une position de la première et/ou de la deuxième partie secondaire au niveau du véhicule de transport est modifiée en retirant ou en ajoutant au moins un élément d'espacement.

8. Procédé (1) d'ajustement d'un véhicule de transport (40) pour une installation de traitement de récipients, dans lequel le véhicule de transport (40) comprend deux parties secondaires (41, 42) se faisant face qui peuvent être déplacées de manière électromagnétique sous forme d'induit au moyen d'un système de moteur linéaire de l'installation de traitement de récipients,
**caractérisé en ce que**
le dispositif (1) comprend un capteur (10) et une table de mesure (20) permettant de placer le véhicule de transport (40) par rapport au capteur (10) de manière à rester immobile, et **en ce que** le capteur (10) est conçu pour déterminer des forces magnétiques afin de déterminer une force magnétique de la première et/ou de la deuxième partie secondaire (41, 42).

9. Dispositif (1) selon la revendication 8, dans lequel la table de mesure (20) comprend au moins une surface d'appui (21a à 21d) permettant de poser le véhicule de transport (40) de manière à rester immobile, laquelle surface d'appui coopère avec des rouleaux (R) et/ou des éléments de contact du véhicule de transport (40) lors de la détermination des forces magnétiques.

10. Dispositif (1) selon la revendication 8 ou 9, dans lequel le capteur (10) comprend un élément magnétique (11) permettant de coopérer avec les parties secondaires (41, 42), et un capteur de force (12).

11. Dispositif (1) selon la revendication 10, dans lequel l'élément magnétique (11) est relié de manière fixe à un côté d'introduction de force du capteur de force (12).

12. Dispositif (1) selon les revendications 9 et 10, dans lequel le capteur de force est agencé séparément de l'élément magnétique et un point d'application de force du capteur de force est relié de manière fixe à la au moins une surface d'appui (21a à 21d).

13. Dispositif (1) selon la revendication 8 ou 9, dans lequel le capteur (10) comprend un élément à effet Hall permettant de déterminer les forces magnétiques au moyen de l'effet Hall.
